# EUROPEAN PATENT SPECIFICATION

(11) **EP 1 712 344 B1**
(45) Date of publication and mention of the grant of the patent: **22.06.2011**
(21) Application number: 05703284.9
(22) Date of filing: 05.01.2005
(51) Int. Cl.: B29D 30/06, B29C 47/08, B29C 71/00

(54) **RUBBER MEMBER CONVEYING DEVICE AND RUBBER MEMBER SUPPLYING SYSTEM WITH THE SAME**
GUMMIGLIEDBEFÖRDERUNGSVORRICHTUNG UND GUMMIGLIEDZUFUHRSYSTEM DAMIT
DISPOSITIF DE TRANSPORT D'ORGANES EN CAOUTCHOUC ET SYSTEME D'ALIMENTATION D'ORGANES EN CAOUTCHOUC

(30) Priority: 06.01.2004 JP 2004001331
(43) Date of publication of application: 18.10.2006
(73) Proprietor: Bridgestone Corporation, Tokyo 104-8340 (JP)
(72) Inventor: NAKAMURA, Mitsuo, Tokyo 1048340 (JP)
(74) Representative: Whalley, Kevin
(86) International application number: PCT/JP2005/000006
(87) International publication number: WO 2005/065925

(56) References cited:
- CH-A- 471 020
- GB-A- 1 331 194
- GB-A- 1 441 077
- JP-A- 5 008 323
- JP-A- 8 244 090
- US-A- 3 888 717
- US-A- 3 921 795
- US-A- 4 234 371
- US-A- 5 853 783
- US-A1- 2001 045 346
- US-A1- 2005 155 846

## Description

### Technical Field

The present invention relates to a rubber member conveying device which conveys a rubber member and a rubber member supplying system having the same, and more particularly, relates to a rubber member conveying device which is especially suitable for conveying an unvulcanized rubber member and a rubber member supplying system having the same.

### Related Art

For pneumatic tires, many types of rubber member, such as a tread rubber constituting a tread, or the like, are used (referring to Japanese Patent Laid-Open Publication No. 5-139127/1993, for example). These rubber members are formed by cutting a to-be-cut material having a long strip shape that is conveyed by a belt conveyor, or the like, to a certain length, and then each rubber member formed is further conveyed by a belt conveyor, or the like, to a position where it is used.

However, because the rubber member that has been cut may have a residual internal strain, shrinkage may be caused in the rubber member, resulting in the length being varied, which may prevent the subsequent processing step from being rapidly performed.

Document US 3 921 795 describes a method and apparatus for receiving and transporting ply stock. US 3 888 717 describes a system for successively splicing bias-cut pieces of rubber cloth.

### Disclosure of the Invention

### Subjects to Be Solved by the Invention

The present invention has been made in view of the above, and the purpose thereof is to provide a rubber member conveying device and a rubber member supplying system having the same which promote the shrinkage of the rubber member, thereby preventing the length variation of the rubber member in the processing step for the rubber member.

According to an aspect of the present invention, there is provided use of a rubber member conveying device as claimed in claim 1.

According to the invention as stated in claim 1, the rubber member having internal strain is conveyed by the conveying part while having vibration imparted by the vibration imparting part, thus the shrinkage of the rubber member that is induced by the internal strain is rapidly promoted by this vibration and almost completed during the conveyance. Therefore, the length variation of the rubber member can be avoided in the subsequent processing step for the rubber member, which allows the processing capability to be substantially improved. In addition, because the rubber member is conveyed with being vibrated, there is no need for providing an extra time period for imparting vibration.

The invention according to claim 2 recites that the vibration imparted to said rubber member by said vibration imparting part has a frequency of 5 to 100 Hz, an amplitude of 0.5 to 10 mm, and a time period of vibration of 1 sec or longer.

According to the above, the internal strain of the rubber member can be sufficiently relieved.

The invention as stated in claim 3 recites that said frequency, said amplitude, and said time period of vibration are set according to the thickness, hardness and amount of internal strain of said rubber member.

According to the above, in relieving the rubber member internal strain, the frequency or amplitude of vibration can be prevented from being unnecessarily high or large, and the vibration time period can be prevented from being unnecessarily long.

According to the above, the vibration imparting part can be formed extremely simple. In addition, when the endless belt rotates for conveyance, vibration is imparted to the rubber member and when running of the endless belt is stopped, no vibration is generated therefore, the vibration can be efficiently generated.

Preferably, as said protruding part, a plurality of revolving elements which are held freely rotatably are provided, and when said endless belt rotates, said revolving elements which are butted against said rubber member are turned by a moving force of said endless belt and a friction force exerted by said rubber member.

According to the above, the rubber member is gradually conveyed by being moved relative to the revolving element due to the rotation of the revolving elements, and thus even if the conveying distance is short, the period of vibration of the rubber member can be sufficiently long to allow the device to be configured significantly compactly. In addition, the plurality of revolving elements disposed cause the conveyed rubber member to be undulated, and thus the rubber member is subjected to vibrations at every single part thereof, which allows the rubber member to be relieved of the internal strain at every single part thereof.

Preferably, as said revolving elements, rollers are provided such that an axis of rotation thereof is in a direction orthogonal to a conveyance direction.

According to the above, the constitution of the vibration generation part can be formed further compact and simple, and a portion of the rubber member that might not be subjected to vibration can be almost thoroughly eliminated.

Preferably, said revolving elements are ball bearings.

According to the above, as compared to the invention of claim 6, the constitution of the vibration generation part can be formed further compact and simple.

According to a further aspect of the invention, there is provided a rubber member supplying system as claimed in claim 7.

Even if a rubber member which has been produced by cutting the to-be-cut material with the cutting unit has internal strain because the to-be-cut material, which has been delivered by the delivery unit, has originally internal strain, the rubber member conveying device conveys the rubber member while imparting vibration thereto, thus the shrinkage of the rubber member that is induced by the internal strain can be almost completed during the conveyance.

Therefore, by using the rubber member supplying system the length variation of the rubber member in the processing step for the rubber member after the cutting can be substantially avoided, which allows the processing capability to be excellently improved. In addition, because the rubber member is conveyed while being vibrated, there is no need for providing an extra time period for imparting vibration. .

According to the above, the cutting can be performed excellently.

An intermediate product having long strip shape and made of rubber can be easily formed by the extrusion process, however, when it is shaped by the extrusion process, internal strain may be caused therein. A to-be-cut material which has been easily formed by the extrusion process is cut and successively supplied to the rubber member conveying device resulting in efficient conveyance.

### Effects of the Invention

The present invention is configured as described above, thus a rubber member conveying device and a rubber member supplying system having the same rapidly promote the shrinkage of the rubber member, thereby preventing the length variation of the rubber member in the processing step for the rubber member.

### Brief Description of Drawings

FIG. 1 is a side view illustrating a rubber member supplying system pertaining to a first embodiment;
FIG 2 is a partial perspective view illustrating the rubber member conveying part in the rubber member supplying system pertaining to the first embodiment;
FIG. 3 is a partial side view illustrating the rubber member conveying part in the rubber member supplying system pertaining to a second embodiment;
FIG. 4 is a partial perspective view illustrating the rubber member conveying part in the rubber member supplying system pertaining to the second embodiment;
FIG. 5 is a partial perspective view illustrating the rubber member conveying part in the rubber member supplying system pertaining to a third embodiment; and
FIG. 6 is a partial perspective view illustrating the rubber member conveying part in the rubber member supplying system pertaining to a fourth embodiment.

### Best Mode Embodiment of the Invention

Hereinbelow, embodiments of the present invention will be described in detail.

### [First embodiment]

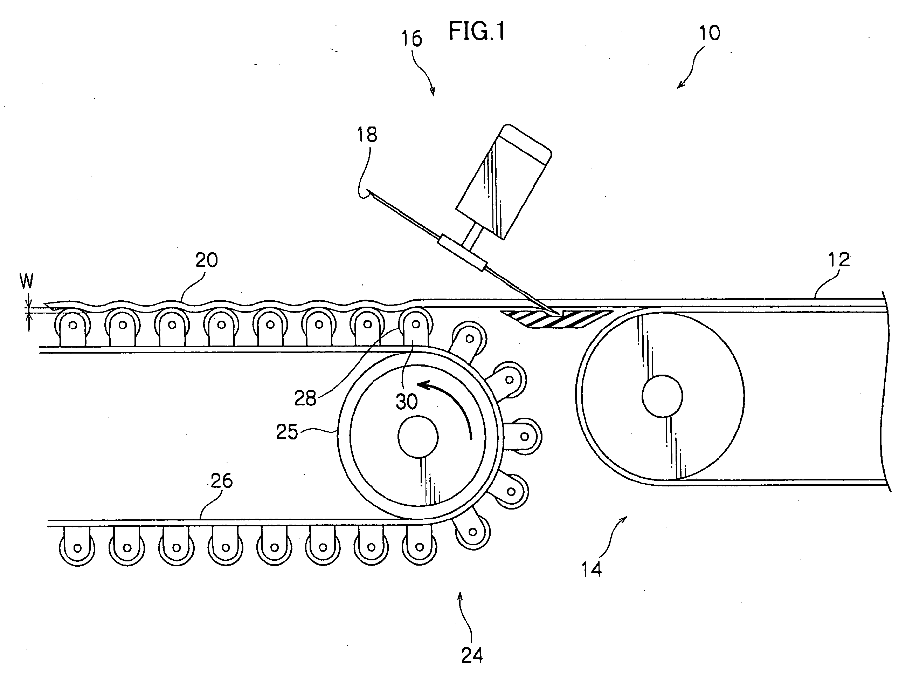

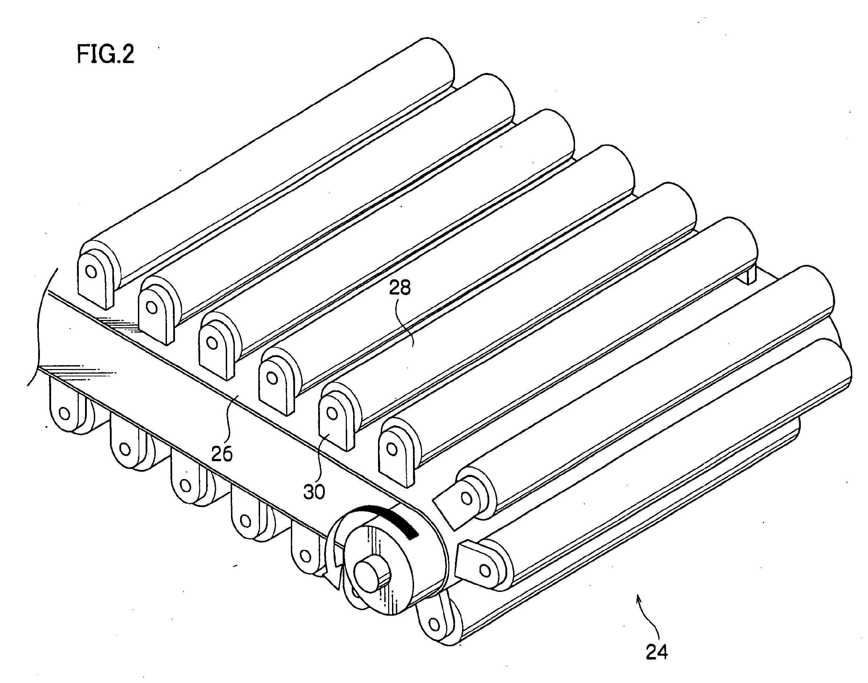

A first embodiment will be described. As shown in FIG. 1 and FIG. 2, a rubber member supplying system 10 pertaining to the present embodiment comprises a belt conveyor 14 which supplies a to-be-cut material 12 having a long strip shape and made of rubber, a cutter (sky bar) 16 which cuts the to-be-cut material 12 supplied by the belt conveyor 14, and a rubber member conveying part 24 which conveys rubber members 20 produced by cutting operation of the cutter 16.

The belt conveyor 14 is capable of intermittent running that is, the conveyance is stopped while the cutter 16 is cutting the to-be-cut material 12. In addition, the cutter 16 has a blade 18 which cuts by rotating movement, for example, and is controlled so as to cut the material 12 in a certain length.

The rubber member conveying part 24 comprises an endless belt 26 which is rotatably held by a pulley 25 at the rear end in the conveyance direction and is also held by a driving roller (not shown) at the front end in the conveyance direction. On the conveying surface side (the outer face side) of the endless belt 26, a number of rollers (free rollers) 28 are successively arranged along the conveyance direction of the endless belt 26 in a manner such that they have the axis of rotation in the width direction of the endless belt 26 (in other words, in the direction orthogonal to the conveyance direction). In addition, a number of supporting parts 30 are protruded from both side edge parts of the endless belt 26 such that they rotatably support the rollers.

Hereinbelow, the function of the rubber member supplying system 10 will be described.

After the to-be-cut material 12 being cut by the cutter 16, the belt conveyor 14 resumes conveyance of the material 12, and when the material 12 is conveyed by a certain distance, the conveyance is stopped. Then, the cutter 16 is moved to cut the to-be-cut material 12. Thus, a rubber member 20 which is cut to a certain length is provided one after another.

When the cutting is finished, the cutter 16 is moved back to an original position, and the belt conveyor 14 resumes conveyance. As a result of this, the rubber member 20 is completely transferred from the belt conveyor 14 onto the rollers 28 in the rubber member conveying part 24.

Herein, the roller 28 which is butted against the rubber member 20 is rotated by the moving force of the endless belt 26 and the friction force exerted by the rubber member 20. Therefore, the rubber member 20 is gradually conveyed at a speed much slower than the moving speed of the endless belt 26, and thus the vibration time period provided for the rubber member 20 becomes sufficiently long. In addition, the number of rollers 28 disposed cause the rubber member 20 to be conveyed while being undulated, in other words, being subjected to a minute up-and-down movement repetitively. Therefore, the rubber member 20 is exposed to vibrations at every single part thereof.

Accordingly, the rubber member 20 can be relieved of the internal strain at every single part thereof, and before the rubber member reaches to the conveyance end of the rubber member conveying part 24, the shrinkage of the rubber member 20 is substantially fully completed. Therefore, in the subsequent processing step for the rubber member 20, the length of the rubber member 20 being varied is prevented, thus the capability for processing the rubber member 20 can be markedly improved. It is noted that the rubber member conveying part 24 may be continuously run.

In addition, as described above, the conveying speed for the rubber member 20 is sufficiently slow, thus the conveying distance for the endless belt 26 can be short, and the rubber member conveying part 24 and the rubber member supplying system 10 can be rendered remarkably compact.

### <EXAMPLE>

In the present EXAMPLE, the diameter of the roller 28 is 20 mm; the spacing between adjacent rollers 28 is 30 mm; the length along the conveyance direction of the endless belt 26 is 2 m; and the moving speed for the endless belt 26 is 40 m/min.

As a result of these arrangements, the frequency of a vibration generated in the rubber member 20 is 20 Hz, and the amplitude (equivalent to W in FIG. 1) is 0.5 to 1.0 mm.

The to-be-cut material 12 is a long strip shaped material that is formed by the extrusion process, and the rubber member 20 provides a tread rubber member. The internal strain of the to-be-cut material 12 is practically dependent on the rubber physical properties.

According to the present EXAMPLE, if the top tread length is 2000 mm, for example, the CPK (Process Capability Index), which has conventionally been ranked at B to C, can be improved to a rank of S in the present embodiment.

### [Second embodiment]

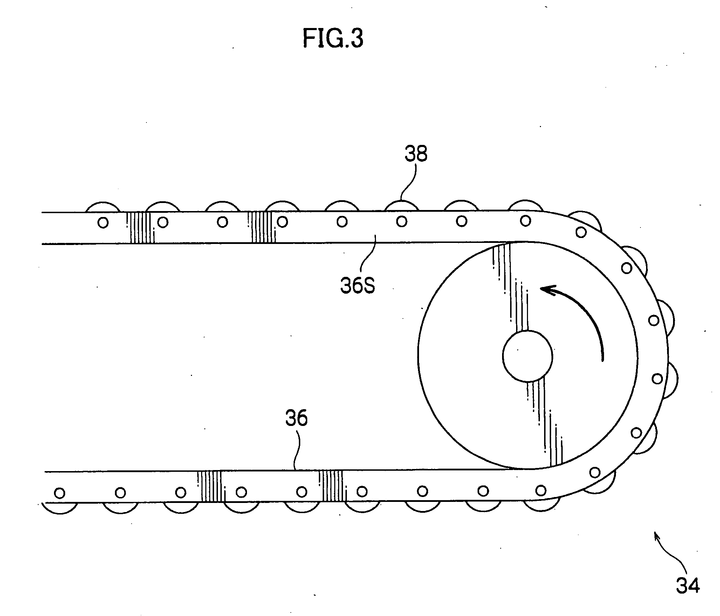

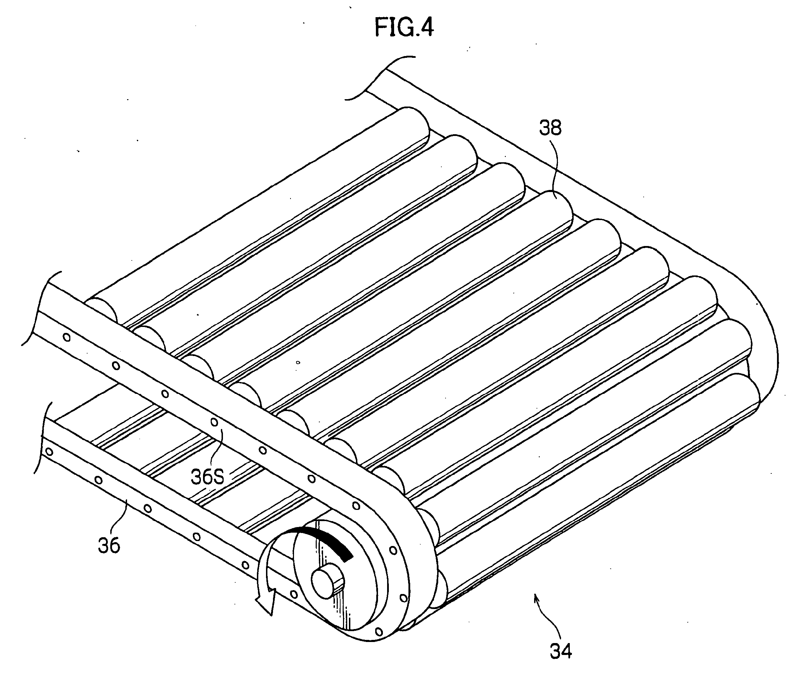

Next, a second embodiment will be described. As shown in FIG. 3 and FIG. 4, a rubber member conveying part 34 in the rubber member supplying system pertaining to the second embodiment comprises an endless belt 36 made of resin in place of the endless belt 26 (see FIG. 1 and FIG. 2) which has been described in the first embodiment. This endless belt 36 is provided with roller holding parts 36S at both ends in the width direction, and the roller holding parts 36S hold a number of rollers 38. These rollers 38 are held such that they have the axis of rotation in the width direction of the endless belt 36 (in other words, in the direction orthogonal to the conveyance direction), the roller face being exposed on the conveying face side of the endless belt 36.

In the present embodiment, as in the first embodiment, the rubber member cut to a certain length is gradually conveyed by the rubber member conveying part 34, while the rollers 38 cause the rubber member to be undulated. Therefore, the present embodiment can provide the same effects as in the first embodiment. In addition, the endless belt 36 is made of resin, thus it can be rendered more lightweight. Further, as compared to the first embodiment, there is no need for providing the supporting parts 30 (see FIG 1 and FIG. 2) which are protruded from the endless belt 26, thus a rubber member supplying system which is simpler in configuration than the first embodiment is realized.

### [Third embodiment]

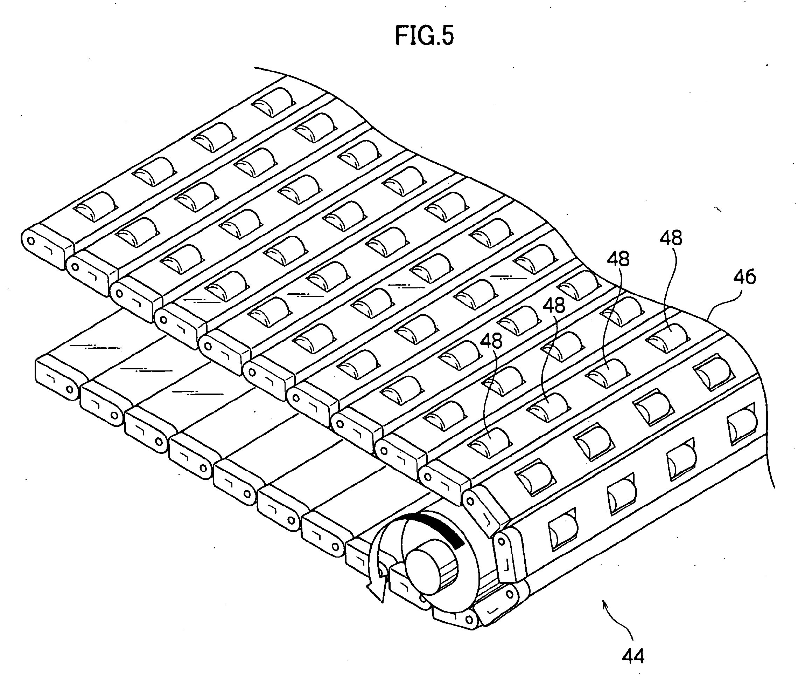

Next, a third embodiment will be described. As shown in FIG. 5, a rubber member conveying part 44 in the rubber member supplying system pertaining to the third embodiment comprises an endless belt 46 made of resin. This endless belt 46 is formed as caterpillar like and long and slender caterpillar-constituting members 50 are linked in the conveyance direction. As this endless belt 46, a commercially available item may be used.

In the respective caterpillar-constituting members 50, a plurality of rollers 48 having a short cylinder shape are rotatably held along the width direction of the endless belt 46. The axis of rotation of the roller 48 is in the direction orthogonal to the conveyance direction.

Accordingly, the same effects as in the second embodiment can be provided. In addition, if a roller 48 had a trouble, only the caterpillar-constituting member 50 holding that roller 48 need to be replaced with new one, thus the cost required for maintenance can be substantially reduced.

### [Fourth embodiment]

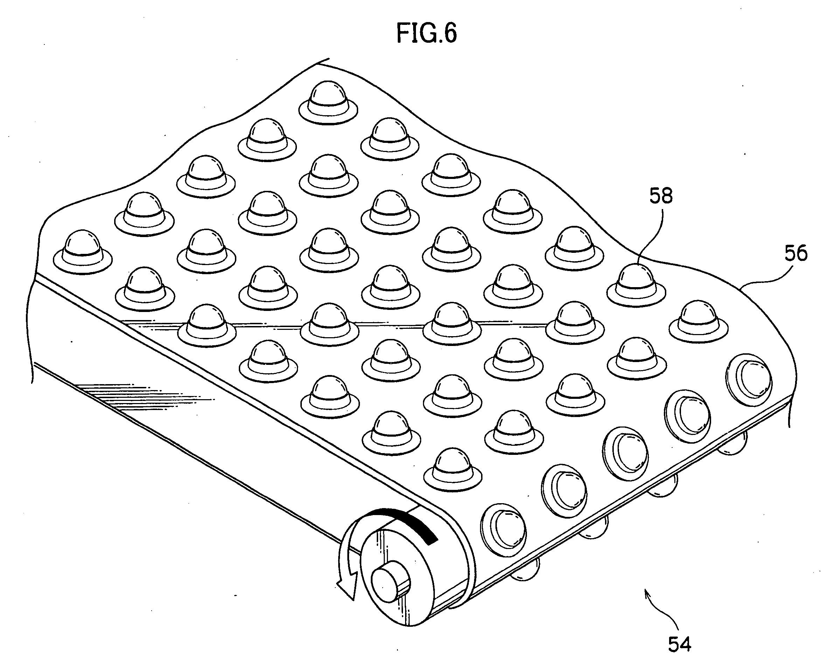

Next, a fourth embodiment will be described. As shown in FIG. 6, a rubber member conveying part 54 in the rubber member supplying system pertaining to the fourth embodiment has a lot of ball bearings 58 disposed on the conveying face side of an endless belt 56.

When a rubber member cut to a certain length is transferred onto the rubber member conveying part 54, the ball bearings 58 which are butted against the rubber member are rotated by the moving force of the endless belt 56 and the friction force exerted by the rubber member, similarly to in the first embodiment. Therefore, the rubber member is gradually conveyed at a speed much slower than the moving speed of the endless belt 56, and thus the vibration time period provided for the rubber member becomes sufficiently long. In addition, lots of ball bearings 58 disposed cause the rubber member to be conveyed while being undulated, thus the rubber member is subjected to vibrations at every single part thereof.

Accordingly, as in the first embodiment, the rubber member can be relieved of the internal strain at every single part thereof. In addition, the ball bearings 58 instead of rollers are disposed on the endless belt 56, thus, like in the third embodiment, the endless belt 56 can be rendered more lightweight, and a rubber member supplying system having a simple configuration can be realized.

Hereinabove, the embodiments of the present invention have been described in detail, however, these embodiments provide only examples, and various modifications and alterations thereof may be made without departing from the scope of the present invention. In addition, it is obvious that the right of the present invention is not limited by the embodiments as described above.

### Industrial Applicability

As described above, the rubber member conveying device and the rubber member supplying system having the same pertaining to the present invention are suited for use as a rubber member conveying device and a rubber member supplying system having the same which rapidly promote the shrinkage of the rubber member, thereby avoiding the length variation of the rubber member in the processing step for the rubber member.

### Explanation of Reference Numerals

10: Rubber member supplying system
12: To-be-cut material
14: Belt conveyor (delivery unit)
16: Cutter (cutting unit)
20: Rubber member
24: Rubber member conveying part (rubber member conveying device)
25: Pulley (conveying part)
26: Endless belt (conveying part, endless belt)
28: Roller (vibration imparting part)
30: Supporting part (vibration imparting part)
34: Rubber member conveying part (rubber member conveying device)
36: Endless belt (conveying part, endless belt)
38: Roller (vibration imparting part)
44: Rubber member conveying part (rubber member conveying device)
46: Endless belt (conveying part, endless belt)
48: Roller (vibration imparting part)
54: Rubber member conveying part (rubber member conveying device)
56: Endless belt (conveying part, endless belt)
58: Ball bearing (vibration imparting part)

## Claims

1. Use of a rubber member conveying device (24) to prevent length variation of a rubber member, the device (24) comprising: a vibration imparting part (28,30) that imparts vibration to a rubber member (20) having internal strain; and a conveying part that conveys the rubber member; wherein the rubber member is conveyed by the conveying part while having vibration imparted thereto by the vibration imparting part, wherein the conveying part is provided with a rotating endless belt (26) that is loaded with the rubber member, a protruding part is provided as the vibration imparting part on a rubber member loading surface side of the endless belt, and the rubber member is moved relatively to the protruding part due to rotation of the endless belt.

2. Use of a rubber member conveying device as claimed in claim 1, wherein the vibration imparted to the rubber member (20) has a frequency of 5 to 100 Hz, an amplitude of 0.5 to 10 mm, and a time period of vibration of 1 sec or longer.

3. Use of a rubber member conveying device as claimed in claim claim 2, wherein the frequency, the amplitude, and the time period of vibration are set according to the thickness, hardness and amount of internal strain of the rubber member (20).

4. Use of a rubber member conveying device as claimed in any preceding claim wherein a plurality of revolving elements (28) that are held freely rotatably are provided as the protruding part, and when the endless belt (26) rotates, the revolving elements that are butted against the rubber member (20) are turned by a moving force of the endless belt and a friction force exerted by the rubber member.

5. Use of a rubber member conveying device as claimed in claim 4, wherein, as the revolving elements, rollers (28) are provided such that an axis of rotation thereof is in a direction orthogonal to a conveyance direction.

6. Use of a rubber member conveying device as claimed in claim 4, wherein the revolving elements are ball bearings (58).

7. A rubber member supplying system, comprising: a delivery unit (14) that delivers a to-be-cut material (12) made of rubber having internal strain; a cutting unit (16) that cuts the to-be-cut material supplied by the delivery unit; and a rubber member conveying device (24) comprising: a vibration imparting part (28, 30) that imparts vibration to a rubber member (20) having internal strain; and a conveying part that conveys the rubber member; wherein the rubber member is conveyed by the conveying part while having vibration imparted thereto by the vibration part, wherein the conveying part is provided with a rotating endless belt (26) that is loaded with the rubber member, a protruding part s provided as the vibration imparting part on a rubber member loading surface side of the endless belt, and the rubber member is moved relatively to the protruding part due to rotation of the endless belt, wherein the conveying device conveys a rubber member that has been cut by the cutting unit (16), the delivery unit (14) being capable of intermittent running, and when the cutting unit (16) cuts the to-be-cut material (12), the delivery unit (14) stops delivery of the to-be-cut material (12), and the rubber member conveying part (24) may be continuously run.

## Patentansprüche

1. Verwendung einer Gummiglied-Beförderungsvorrichtung (24), um eine Längenvariation eines Gummiglieds zu verhindern, wobei die Vorrichtung (24) umfasst: Einen vibrationsübermittelnden Teil (28, 30), der eine Vibration auf ein Gummiglied (20) mit einer inneren Beanspruchung übermittelt, und ein Beförderungsteil, welches das Gummiglied befördert, wobei das Gummiglied durch das Beförderungsteil befördert wird, während darauf Vibrationen durch das vibrationsübermittelnde Teil übermittelt werden, wobei das Beförderungsteil mit einem rotierenden endlosen Band (26) ausgestattet ist, welches mit dem Gummiglied beladen ist, ein hervorstehendes Teil als das vibrationsübermittelnde Teil auf einer Gummiglied-Ladeoberflächenseite des endlosen Bandes vorgesehen ist, und das Gummiglied relativ zu dem hervorstehenden Teil aufgrund der Rotation des endlosen Bandes bewegt wird.

2. Verwendung einer Gummiglied-Beförderungsvorrichtung nach Anspruch 1, wobei die Vibration, die auf das Gummiglied (20) übermittelt wird, eine Frequenz von 5 bis 100 Hz, eine Amplitude von 0,5 bis 10 mm und eine Vibrationsdauer von 1 Sek. oder länger aufweist.

3. Verwendung einer Gummiglied-Beförderungsvorrichtung nach Anspruch 2, wobei die Frequenz, die Amplitude und die Vibrationsdauer entsprechend der Dicke, der Härte und dem Maß der inneren Beanspruchung des Gummiglieds (20) eingestellt sind.

4. Verwendung einer Gummiglied-Beförderungsvorrichtung nach irgendeinem der vorigen Ansprüche, wobei eine Vielzahl rotierender Elemente (28) als das hervorstehende Teil vorgesehen sind und die frei drehbar gehalten werden, und wenn sich das endlose Band (26) dreht, werden die rotierenden Elemente, die gegen das Gummiglied (20) stoßen, gedreht durch eine Bewegungskraft des endlosen Bandes und eine Reibungskraft, die durch das Gummiglied ausgeübt wird.

5. Verwendung einer Gummiglied-Beförderungsvorrichtung nach Anspruch 4, wobei Rollen (28) als die rotierenden Elemente so vorgesehen sind, dass ihre Rotationsachse in einer Richtung senkrecht zu einer Beförderungsrichtung liegt.

6. Verwendung einer Gummiglied-Beförderungsvorrichtung nach Anspruch 4, wobei die rotierenden Elemente Kugellager (58) sind.

7. Ein Gummiglied-Zufuhrsystem, umfassend: eine Transporteinheit (14), die ein zu schneidendes Material (12) aus Gummi transportiert, das mit einer inneren Belastung versehen ist; eine Schneideeinheit (16), die das zu schneidende Material schneidet, welches durch die Transporteinheit zugeführt wurde; und eine Gummiglied-Beförderungsvorrichtung (24), umfassend: ein vibrationsübermittelndes Teil (28, 30), welches eine Vibration auf ein Gummiglied (20) übermittelt, welches eine innere Belastung aufweist, und ein Beförderungsteil, welches das Gummiglied befördert, wobei das Gummiglied durch das Beförderungsteil befördert wird, während darauf eine Vibration durch das Vibrationsteil übermittelt wird, wobei das Beförderungsteil mit einem rotierenden endlosen Band (26) ausgestattet ist, welches mit dem Gummiglied beladen ist, wobei ein hervorstehendes Teil als vibrations-übermittelndes Teil auf einer Gummiglied-Beladungsoberflächenseite des endlosen Bandes vorgesehen ist, und das Gummiglied relativ zu dem hervorstehenden Teil aufgrund der Rotation des endlosen Bandes bewegt wird, wobei die Beförderungsvorrichtung ein Gummiglied befördert, welches durch die Schneideeinheit (16) geschnitten wurde, wobei die Transporteinheit (14) für einen intermittierenden Betrieb geeignet ist, und wenn die Schneideeinheit (16) das zu schneidende Material (12) schneidet, die Transporteinheit (14) den Transport des zu schneidenden Materials (12) stoppt und das Gummiglied-Beförderungsteil (24) kontinuierlich laufen kann.

## Revendications

1. Utilisation d'un dispositif de transport (24) d'un élément en caoutchouc pour éviter une variation de longueur d'un élément en caoutchouc, le dispositif (24) comprenant : une partie de transmission de vibrations (28, 30) qui transmet des vibrations à un élément en caoutchouc (20) présentant une déformation interne ; et une partie de transport qui transporte l'élément en caoutchouc ; où l'élément en caoutchouc est transporté par la partie de transport tout en recevant une vibration de la part de la partie de transmission de vibrations, où la partie de transport est dotée d'une courroie rotative sans fin (26) sur laquelle est chargé l'élément en caoutchouc, une partie saillante est prévue comme étant la partie de transmission de vibrations côté surface de chargement de l'élément en caoutchouc de la courroie sans fin, et l'élément en caoutchouc est déplacé relativement à la partie saillante du fait de la rotation de la courroie sans fin.

2. Utilisation d'un dispositif de transport d'un élément en caoutchouc telle que revendiquée dans la revendication 1, dans laquelle la vibration transmise à l'élément en caoutchouc (20) a une fréquence de 5 à 100 Hz, une amplitude de 0,5 à 10 mm et une période de vibration d'une seconde ou plus.

3. Utilisation d'un dispositif de transport d'un élément en caoutchouc telle que revendiquée dans la revendication 2, dans laquelle la fréquence, l'amplitude et la période de vibration sont définies en fonction de l'épaisseur, de la dureté et de la grandeur de la déformation interne de l'élément en caoutchouc (20).

4. Utilisation d'un dispositif de transport d'un élément en caoutchouc telle que revendiquée dans l'une des revendications précédentes, dans laquelle une pluralité d'éléments tournants (28) qui sont maintenus libres en rotation sont fournis comme étant la partie saillante, et lorsque la courroie sans fin (26) est en rotation, les éléments tournants qui viennent buter contre l'élément en caoutchouc (20) sont mis en rotation par une force motrice de la courroie sans fin et par une force de frottement exercée par l'élément en caoutchouc.

5. Utilisation d'un dispositif de transport d'un élément en caoutchouc telle que revendiquée dans la revendication 4, dans laquelle, à titre des éléments tournants, des rouleaux (28) sont fournis de sorte que leur axe de rotation soit dans une direction orthogonale à une direction de transport.

6. Utilisation d'un dispositif de transport d'un élément en caoutchouc telle que revendiquée dans la revendication 4, dans laquelle les éléments tournants sont des roulements à billes (58).

7. Système d'alimentation d'un élément en caoutchouc, comprenant : une unité de distribution (14) qui fournit un matériau à couper (12) réalisé en caoutchouc présentant une déformation interne ; une unité de coupe (16) qui coupe le matériau à couper alimenté par l'unité de distribution ; et un dispositif de transport (24) d'un élément en caoutchouc comprenant : une partie de transmission de vibrations (28, 30) qui transmet une vibration à un élément en caoutchouc (20) présentant une déformation interne ; et une partie de transport qui transporte l'élément en caoutchouc ; où l'élément en caoutchouc est transporté par la partie de transport tout en recevant une vibration de la part de la partie de vibration, où la partie de transport est dotée d'une courroie rotative sans fin (26) sur laquelle est chargé l'élément en caoutchouc, une partie saillante est prévue comme étant la partie de transmission de vibrations côté surface de chargement de l'élément en caoutchouc de la courroie sans fin, et l'élément en caoutchouc est déplacé relativement à la partie saillante du fait de la rotation de la courroie sans fin, où le dispositif de transport transporte un élément en caoutchouc qui a été coupé par l'unité de coupe (16), l'unité de distribution (14) étant capable de fonctionner par intermittence, et lorsque l'unité de coupe (16) coupe le matériau à couper (12), l'unité de distribution (14) arrête la distribution du matériau à couper (12), et la partie de transport (24) de l'élément en caoutchouc peut fonctionner en continu.
